# EUROPÄISCHE PATENTSCHRIFT

(11) **EP 1 157 436 B1**
(45) Veröffentlichungstag und Bekanntmachung des Hinweises auf die Patenterteilung: **19.11.2003**
(21) Anmeldenummer: 00910734.3
(22) Anmeldetag: 29.02.2000
(51) Int. Cl.: H01M 8/02

(54) **BRENNSTOFFZELLE MIT MODULAREN, FLEXIBLEN GASVERTEILERSTRUKTUREN**
FUEL CELL WITH MODULAR, FLEXIBLE GAS DISTRIBUTION STRUCTURES
PILE A COMBUSTIBLE DOTEE DE STRUCTURES DE REPARTITION DE GAZ MODULABLES ET FLEXIBLES

(30) Priorität: 03.03.1999 DE 19908989
(43) Veröffentlichungstag der Anmeldung: 28.11.2001
(73) Patentinhaber: Forschungszentrum Jülich GmbH, 52425 Jülich (DE)
(72) Erfinder: THOM, Frank, D-52353 Düren (DE)
(86) Internationale Anmeldenummer: EP0001700
(87) Internationale Veröffentlichungsnummer: WO00052777

(56) Entgegenhaltungen:
- PATENT ABSTRACTS OF JAPAN vol. 010, no. 289 (E-442), 2. Oktober 1986 (1986-10-02) -& JP 61 109262 A (HITACHI LTD), 27. Mai 1986 (1986-05-27)
- PATENT ABSTRACTS OF JAPAN vol. 008, no. 209 (E-268), 22. September 1984 (1984-09-22) -& JP 59 096669 A (KOGYO GIJUTSUIN;OTHERS: 0J), 4. Juni 1984 (1984-06-04)
- PATENT ABSTRACTS OF JAPAN vol. 012, no. 314 (E-649), 25. August 1988 (1988-08-25) -& JP 63 080478 A (FUJI ELECTRIC CO LTD), 11. April 1988 (1988-04-11)
- PATENT ABSTRACTS OF JAPAN vol. 011, no. 187 (E-516), 16. Juni 1987 (1987-06-16) -& JP 62 017959 A (FUJI ELECTRIC CO LTD), 26. Januar 1987 (1987-01-26)

## Beschreibung

Die Erfindung betrifft eine Brennstoffzelle mit einer Gasverteilerstruktur.

Eine Brennstoffzelle weist eine Kathode, einen Elektrolyten sowie eine Anode auf. Der Kathode wird ein Oxidationsmittel wie Luft und der Anode wird ein Brennstoff wie Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur 700 bis 1000 °C beträgt. An der Kathode einer Hochtemperaturbrennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Die Betriebstemperatur einer PEM-Brennstoffzelle liegt bei ca. 80° C. An der Anode einer PEM-Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt.

Bisherige bipolaren Platten bzw. Gasverteiler weisen folgende Nachteile auf
- die in ihnen mechanisch eingebrachten Gaskanäle (z.B. durch Fräsen) führen zu erhöhtem Materialverbrauch. Das ausgefräste Material trägt nicht mehr unmittelbar zur eigentlichen Funktion des Gasverteilers bei. Die Bearbeitung durch Fräsen ist teuer.
- Bereits hergestellte Gasverteiler lassen sich nicht zu flächenmäßig größeren Gasverteilern zusammenschalten. Es müssen entsprechende Gasverteiler neu gefertigt werden.
- Durch den Betrieb lokal stark beanspruchter Bereiche des Gasverteilers (z.B. durch Korrosion, mechanische Beanspruchung) lassen sich nicht von den intakten Bereichen trennen. Aufwendige Wartungsarbeiten bzw. ein nicht weiter zu benutzender Gasverteiler können die Folge sein.

Die verbindenden Elemente weisen Verteilerstrukturen für die Betriebsmittel auf. Durch eine Verteilerstruktur wird ein Betriebsmittel geeignet an einer Elektrode verteilt.

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt.

Aus der Druckschrift DE 195 198 47 C1 ist bekannt, Brennstoff wie Methan intern, das heißt unmittelbar an der Anode einer SOFC-Brennstoffzelle zu reformieren. Der deutschen Patentanmeldung DE 196 46 354 Al ist zu entnehmen, daß Brennstoff wie Methanol an der Anode einer PEM-Brennstoffzelle mittels eines Katalysators wie Platin oxidiert werden kann und so Wasserstoff freigesetzt wird.

In einer Brennstoffzelle treten Temperaturunterschiede auf. Diese können zum einen durch eine Luftkühlung verursacht (Ch. Rechenauer, E. Achenbach, Dreidimensionale mathematische Modellierung des stationären und instationären Verhaltens oxidkeramischer Hochtemperaturbrennstoffzellen Jül-2752) werden. Zum anderen können Temperaturunterschiede durch die ungleichmäßig verteilte Methanumset zungsgeschwindigkeit (P. Vernoux, J. Guindet, M. Kleitz, Gradual Internal Methane Reforming in Intermediate-Temperature Solid-Oxide Fuel Cells J. Electrochem. Soc., Vol. 145, No. 10, 1998, pp. 3487-3492), (J. Meusinger, E. Riensche, U. Stimming, Reforming of natural gas in solid oxide fuel cell systems, Journal of Power Sources 71 (1998), pp. 315-320) hervorgerufen werden. Unterschiedliche Temperaturen führen aufgrund der unterschiedlichen Ausdehnungskoeffizienten der Materialien, aus denen eine Brennstoffzelle besteht (FACTS & FIGURES, an International Energy Agency SOFC Task Report, Berne, April 1992), zu thermomechanischen Spannungen bis hin zum Materialversagen. Ferner resultiert aus zyklischen Betriebsweisen (An,-Abfahren eines Brennstoffzellenstapels, Laständerungen) ein nicht isothermes Verhalten (Ch. Rechenauer, E. Achenbach, Dreidimensionale mathematische Modellierung des stationären und instationären Verhaltens oxidkeramischer Hochtemperaturbrennstoffzellen Jül-2752).

Thermomechanische Spannungen können zu irreversiblen Schäden führen (z.B. irreversibles "Durchbiegen" der Verbundstruktur, Längenänderungen).

Dieses "Durchbiegen" führt zu Wirkungsgradeinbußen aufgrund:
- lokaler Spannungsspitzen an den Berührungspunkten Elektrode-Gasverteiler bzw. Elektrode-bipolare Platte, die zu Mikrorissen führen können bzw. unterkritisches Rißwachstum begünstigen. Undichtigkeiten zwischen Anoden- und Kathodenraum und/oder Materialversagen können die Folgen sein.
- einer Abnahme der Kontaktierungsstellen zwischen einer bipolaren Platte und der Brennstoffzelle und damit zu einer ungleichmäßigen Stromdichteverteilung.

Aufgabe der Erfindung ist es, eine Brennstoffzelle zu schaffen, bei der Schädigungen aufgrund von thermischen Spannungen vermieden werden und die sich einfach herstellen läßt.

Die erfindungsgemäße Aufgabe wird durch eine Vorrichtung mit den Merkmalen des Anspruchs 1 gelöst. Vorteilhafte Ausgestaltungen ergeben sich aus den Unteransprüchen.

Die Vorrichtung umfaßt eine Brennstoffzelle mit wenigstens einer Gasverteilerstruktur mit Kanälen für die Führung eines Betriebsmittels. Die Kanäle sind aus mehreren Bauteilen (modulare Gasverteilereinheiten) zusammengesetzt. Sie können vorteilhaft lose miteinander in Verbindung stehen. Die Bauteile sind dann - anders ausgedrückt - nicht starr miteinander verbunden. Die verschiedenen Bauteile können vorteilhaft mittels einer oder mehrerer flexibler Folien oder Streifen miteinander in Verbindung stehen. Flexible Verbindungsmittel wie Folien oder Streifen können an den einzelnen Bauteilen der Kanäle befestigt sein. Die Befestigung kann eine Schweißverbindung sein. Eine Folie, die einen Kathodenraum (Raum, in dem sich die Kathode befindet oder der an die Kathode angrenzt) von einem Anodenraum (Raum, in dem sich die Anode befindet oder der an die Anode angrenzt) gasdicht trennt, kann lose auf den Bauteilen der Kanäle aufliegen.

Durch den flexiblen Aufbau können thermisch bedingte Längenänderungen kompensiert werden. Das Entstehen thermischer Spannungen wird entsprechend vermieden. Die anspruchsgemäße Vorrichtung verhält sich entsprechend stabil.

Eine modulare Gasverteilereinheit kann röhrenförmig sein. Sie weist Öffnungen auf, die zur angrenzenden Elektrode führen. Ein Betriebsmittel gelangt über eine solche Öffnung zur Elektrode. Eine Gasverteilereinheit umfaßt ferner einen Ein- und Auslaß, über die ein Betriebsmittel in die modulare Gasverteilereinheit ein- bzw. (abgereichert) austritt.

Insbesondere handelt es sich bei der Brennstoffzelle um eine Hochtemperaturbrennstoffzelle, da hier thermisch bedingte Spannungen ein wesentliches Problem darstellen.

Es zeigen
- Figur 1:: modulare Gasverteilereinheit,
- Figur 2:: vorteilhaft verbundene Gasverteilereinheiten,
- Figur 3:: Einbindung des Gasverteilers zwischen Anoden- und Kathodenraum,
- Figur 4:: Haken-Ösen-Prinzip,
- Figur 5:: miteinander verbundene Haken für die Verbindung durch das Haken-Ösen-Prinzip.

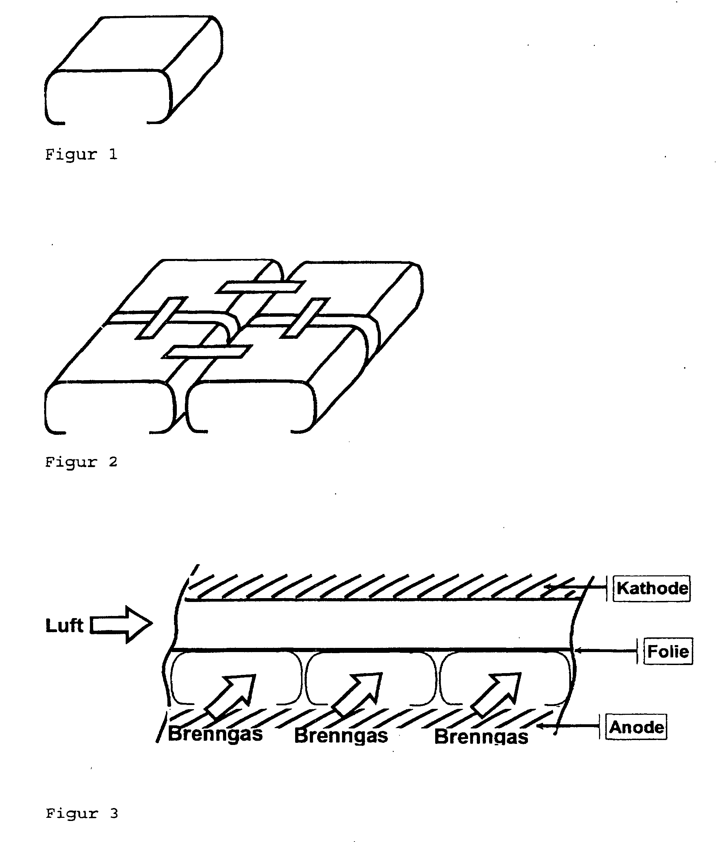

Einzelne modulare Gasverteilereinheiten [Figur1] können durch z.B. Kaltverformen von Blechen direkt auf einfache und besonders preiswerte Weise hergestellt werden. Durch eine vorteilhafte Verbindung der modularen Gasverteilereinheiten miteinander (z.B. durch Anschweißen dünner Metallstreifen) [Figur 2], können so Gasverteiler beliebiger Fläche entstehen. Durch Verformbarkeit (Biegbarkeit) der Verbindungsmittel ist sichergestellt, daß der gesamte Aufbau des Gasverteilers an eine beliebige Form (z. B.: Röhrenform, ebene Fläche) angepaßt werden kann.

In Figur 3 wird dargestellt, wie der Gasverteiler zwischen Anode - Elektrolyt - bipolare Platte eingefügt ist, um eine separate Gasversorgung des Anodenraums und des Kathodenraums zu ermöglichen. Dargestellt ist eine Kreuzstromführung (anoden- und kathodenseitig geführte Betriebsmittel strömen im Kreuzstrom zueinander) der Betriebsstoffe. Die elektrische Leitung und die Gasdichtheit zwischen Anoden- und Kathodenraum wird z.B. durch eine eingebrachte metallische Folie sichergestellt.

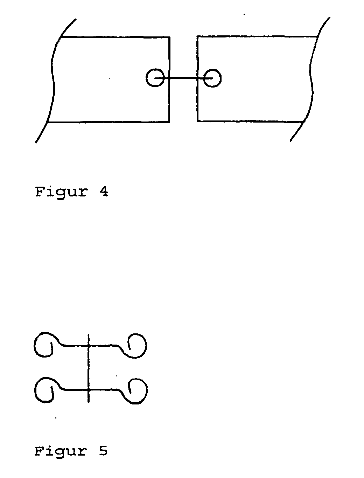

Dieses wird durch die modulare Bauweise des Gasverteilers und eine lösbare Fixierung der modularen Einheiten untereinander erreicht. Einzelne modulare Gasverteilereinheiten lassen sich in einer vorteilhaften Ausgestaltung der Erfindung leicht durch das Haken-Ösen-Prinzip miteinander verbinden, wie zum Beispiel in der Figur 4 gezeigt wird. Die Ösen sind z.B. in die Seitenwände des Gasverteilers eingebracht. Die Haken verbinden die modularen Gasverteiler. Drei Haken (ein dritter Haken wird in Aufsicht als vertikaler Strich dargestellt) können miteinander verbunden werden, wie in Figur 5 gezeigt wird. Gasverteiler beliebiger Fläche sind so konstruierbar.

## Patentansprüche

1. Brennstoffzelle, umfassend zwei Elektroden, eine dazwischen liegende Elektrolytschicht und wenigstens eine innere, an eine Elektrode angrenzende Gasverteilerstruktur zur Zu- und Abführung eines Betriebsmittels an bzw. von dieser Elektrode,
**dadurch gekennzeichnet,**
**daß** die Gasverteilerstruktur sowohl in Betriebsmittelströmung, als auch quer dazu mehrere miteinander in Verbindung stehende modulare Gasverteilereinheiten umfaßt.

2. Brennstoffzelle nach vorhergehendem Anspruch, wobei die modularen Gasverteilereinheiten lose miteinander in Verbindung stehen.

3. Brennstoffzelle nach Anspruch 1 oder 2, **dadurch gekennzeichnet, daß** eine modulare Gasverteilereinheit als Rohrstück ausgestaltet ist, das eine oder mehrere Öffnungen aufweist, die zur angrenzenden Elektrode führen.

4. Brennstoffzelle nach einem der vorhergehenden Ansprüche, **dadurch gekennzeichnet, daß** modulare Gasverteilereinheiten eine Folie kontaktieren, die den Anodenraum einer Brennstoffzelle vom Kathodenraum einer weiteren Brennstoffzelle gasdicht trennt.

5. Brennstoffzelle nach einem der vorhergehenden Ansprüche, **dadurch gekennzeichnet, daß** eine modulare Gasverteilereinheit aus einem gebogenen Blech besteht.

6. Brennstoffzelle nach einem der vorhergehenden Ansprüche, **dadurch gekennzeichnet**, die Brennstoffzelle eine Hochtemperaturbrennstoffzelle ist.

## Claims

1. A fuel cell comprising two electrodes, an electrolyte layer situated there between, and at least one internal gas distributor structure adjacent to an electrode for the feeding and discharging of an operating medium to or from said electrode,
**characterised in that**
the gas distributor structure comprises, both in the flow of the operating medium and transversely thereto, a plurality of mutually connected, modular gas distributor units.

2. A fuel cell according to the preceding claim, wherein the modular gas distributor units are loosely connected to each other.

3. A fuel cell according to claim 1 or 2, **characterised in that** a modular gas distributor unit is designed as a tube section which comprises one or more openings which lead to the adjacent electrode.

4. A fuel cell according to any one of the preceding claims, **characterised in that** modular gas distributor units are in contact with a film which effects gas-tight separation of the anode compartment of a fuel cell from the cathode compartment of a further fuel cell.

5. A fuel cell according to any one of the preceding claims, **characterised in that** a modular gas distributor unit consists of a bent metal sheet.

6. A fuel cell according to any one of the preceding claims, **characterised in that** the fuel cell is a high-temperature fuel cell.

## Revendications

1. Pile à combustible comprenant deux électrodes, une couche d'électrolyte interposée entre elles et au moins une structure intérieure adjacente à une électrode et formant répartiteur de gaz pour envoyer un fluide de fonctionnement à cette électrode et pour l'en évacuer,
**caractérisée**
**en ce que** la structure formant répartiteur de gaz comprend tant dans le sens du courant du fluide de fonctionnement que perpendiculairement à celui-ci, plusieurs unités modulaires formant répartiteur de gaz reliées entre elles.

2. Pile à combustible suivant la revendication précédente dans laquelle les unités modulaires formant répartiteur de gaz sont reliées entre elles de manière lâche.

3. Pile à combustible suivant la revendication 1 ou 2, **caractérisée en ce qu'**une unité modulaire formant répartiteur de gaz est constituée sous la forme d'un tronçon tubulaire qui a une ouverture ou plusieurs ouvertures qui conduisent à l'électrode adjacente.

4. Pile à combustible suivant l'une des revendications précédentes, **caractérisée en ce** des unités modulaires formant répartiteur de gaz viennent en contact avec une feuille qui sépare d'une manière étanche au gaz la chambre d'anode d'une pile à combustible de la chambre de cathode d'une autre pile à combustible.

5. Pile à combustible suivant l'une des revendications précédentes,
**caractérisée en ce qu'**une unité modulaire formant répartiteur de gaz est constituée d'une tôle coudée.

6. Pile à combustible suivant l'une des revendications précédentes, **caractérisée en ce que** la pile à combustible est une pile à combustible à haute température.
